# EUROPEAN PATENT APPLICATION

(11) **EP 3 196 828 A1**
(43) Date of publication of application: **26.07.2017**
(21) Application number: 17152238.6
(22) Date of filing: 19.01.2017
(51) Int. Cl.: G06Q 30/06, G06Q 30/02, G06Q 20/32

(54) **METHOD AND APPARATUS FOR SEARCHING FOR PRODUCT BASED ON LOCATION**

(30) Priority: 22.01.2016 KR 20160008032
(71) Applicant: Jang, Yoon Su, Gyeonggi-do 12949 (KR)
(72) Inventor: Jang, Yoon Su, Gyeonggi-do 12949 (KR)
(74) Representative: Patentanwälte Ruff, Wilhelm, Beier, Dauster & Partner mbB

(57) **Abstract**

Disclosed are a location-based product search method and apparatus. A product search server collects location information of one or more user terminals, receives feature information of a second user from a first user terminal, searches for a second user terminal corresponding to the feature information of the second user among one or more user terminals located within an area based on location information of the first user terminal, and provides product information corresponding to the second user terminal to the first terminal.

## Description

This application claims the benefit of Korean Patent Application No. 10-2016-0008032, filed on January 22, 2016, in the Korean Intellectual Property Office, the disclosure of which is incorporated herein in its entirety by reference.

The invention relates to a product search method and apparatus.

Generally, people visit online or offline shops to purchase desired products. People who know product names or brand names may easily search for desired products by searching for the product names or brand names in an online shopping mall. However, when a person walks around and sees clothes or bags worn by nearby people that the person likes, it is difficult to find information regarding the clothes or the bags because the people pass by quickly.

It is the technical problem underlying the invention to provide a method and apparatus capable of easily searching for products carried or worn by nearby people.

The invention solves this problem by providing a method having the features of claim 1 or 9 and a computer-readable recording medium having the features of claim 13 or 14. Advantageous embodiments of the invention are mentioned in the dependent claims, the wording of which is herewith incorporated by reference to avoid unnecessary text repetition.

The location-based product search method and apparatus according to the invention may easily acquire information regarding a product worn or carried by nearby users.

Additional aspects will be set forth in part in the description which follows and, in part, will be apparent from the description, or may be learned by practice of the presented embodiments.

According to one or more embodiments of the invention, a location-based product search method which is performed by a product search server includes collecting location information of one or more user terminals; receiving feature information of a second user from a first user terminal; searching for a second user terminal corresponding to the feature information of the second user among one or more user terminals located within an area based on location information of the first user terminal; and providing product information mapped to the second user terminal to the first user terminal.

According to one or more embodiments of the invention, a location-based product search method which is performed by a user terminal includes receiving an input of user feature information through a screen interface; transmitting the user feature information to a product search server; and receiving product information that is mapped to a user terminal found based on the user feature information among one or more user terminals located within an area, which is identified based on a location of the user terminal, from the product search server and displaying the received product information.

These and/or other aspects will become apparent and more readily appreciated from the following description of the embodiments, taken in conjunction with the accompanying drawings in which:
FIG. 1 is a diagram showing an example in which a location-based product search is applied according to an embodiment of the present invention;
FIG. 2 is a diagram showing a schematic diagram of a whole location-based product search system according to an embodiment of the present invention;
FIG. 3 is a diagram showing an example configuration of a product search server according to an embodiment of the present invention;
FIG. 4 is a diagram showing an example of an input method of movement information among user feature information according to an embodiment of the present invention;
FIG. 5 is a diagram showing an example of an input method of color information among user feature information according to an embodiment of the present invention;
FIG. 6 is a diagram showing an example of product information stored in a product search server according to an embodiment of the present invention;
FIG. 7 is a diagram showing an example of a product search result screen according to an embodiment of the present invention;
FIG. 8 is a diagram showing an example flow of a location-based product search method according to an embodiment of the present invention;
FIG. 9 is a diagram showing an example configuration of a user terminal for product search according to an embodiment of the present invention; and
FIG. 10 is a diagram showing an example of a product search method of a user terminal according to an embodiment of the present invention.

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description.

Hereinafter, a method and apparatus for searching for a product based on location will be described in detail with reference to the accompanying drawings.

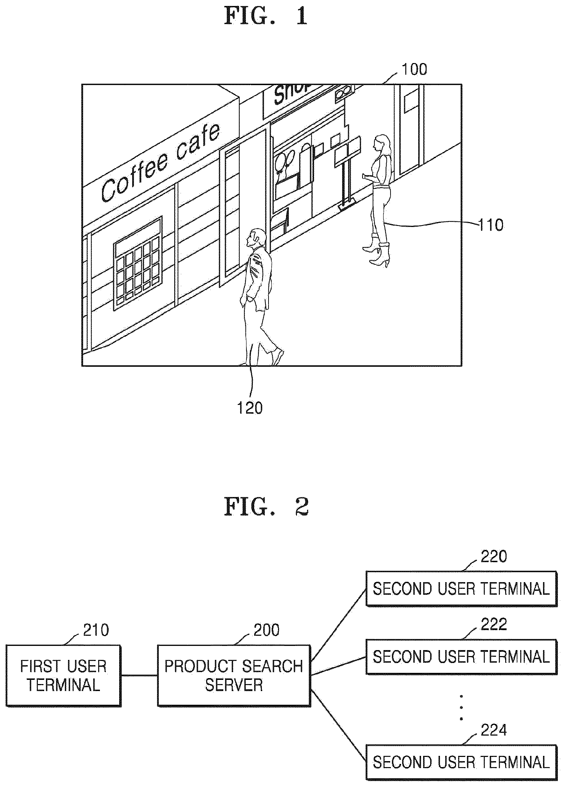

Referring to FIG. 1, in an outdoor area 100 where an unspecified number of people are, there may be a person (hereinafter, referred to as a first user 110) who wants to purchase a product (e.g., shoes) worn or carried by another person. Also, there may be a person (hereinafter referred to as a second user 120) who wants to sell a product worn or carried by him or her. For example, the second user 120 may be an ordinary person who wants to sell used products, an operator of an online shopping mall, or an advertising model for a specified company or brand. Depending on the case, the first user 110 may be the second user 120, and conversely, the second user 120 may be the first user 110.

However, the second user 120 may pass the first user 110 in an instant with no time to check a brand of a product worn or carried by the second user 120. Also, it may be difficult for the first user 110 to perform an online search in the form of text because a brand name is not marked on the product or the brand is made up of symbols or images. This embodiment proposes a method in which the first user 110 easily searches for a product of the second user 120 through FIG. 2 and the following figures.

Here, the product worn or carried by the second user 120 refers to various belongings such as a bag and an umbrella, various accessories such as earrings and a ring, and hobby supplies such as a drone and a skateboard in addition to clothing such as clothes, a cap, and shoes. An automobile driven by or a motorcycle or bicycle ridden by the second user 120 may correspond to the product according to this embodiment. Also, a pet may be included as an example of the product according to this embodiment.

The first user 110 searching for a product refers to the first user 110 searching for the product by inputting information through a first user terminal carried by the first user 110. For convenience of description, however, the first user terminal and the first user 110 are used interchangeably unless there is room for confusion. Also, the second user 120 and the second user terminal may be used interchangeably.

Referring to FIGS. 1 and 2 together, at least one or more second users 120 register information on at least one product intended to be sold or promoted in a product search server 200 by using second user terminals 220, 222, and 224 carried by the second users 120.

For example, the second user 120 may register information regarding various products intended to be sold or promoted such as clothing, hobby supplies, and automobiles in the product search server 200. The second user may directly register product information provided by a manufacturer in the product search server 200. Alternatively, when the second user 120 registers product identification information in the product search server 200, the product search server 220 may obtain product information from a corresponding manufacturer server or the like on the basis of the product identification information, and may register the obtained product information.

As another example, the second user 120 may take a product photo and may register the product photo in the product search server 200 in addition to product information. That is, the second user 120 may put on clothes or the like, take a photo of the clothes, and then register the photo in the product search server 200. When the first user 110 likes a cap worn by the second user 120, the first user 110 may search for the second user 120. In this case, the first user 110 may easily search for and find the liked cap through a photo in which the second user 120 is wearing the cap even when the product search server 200 has a plurality of caps associated with the second user 120.

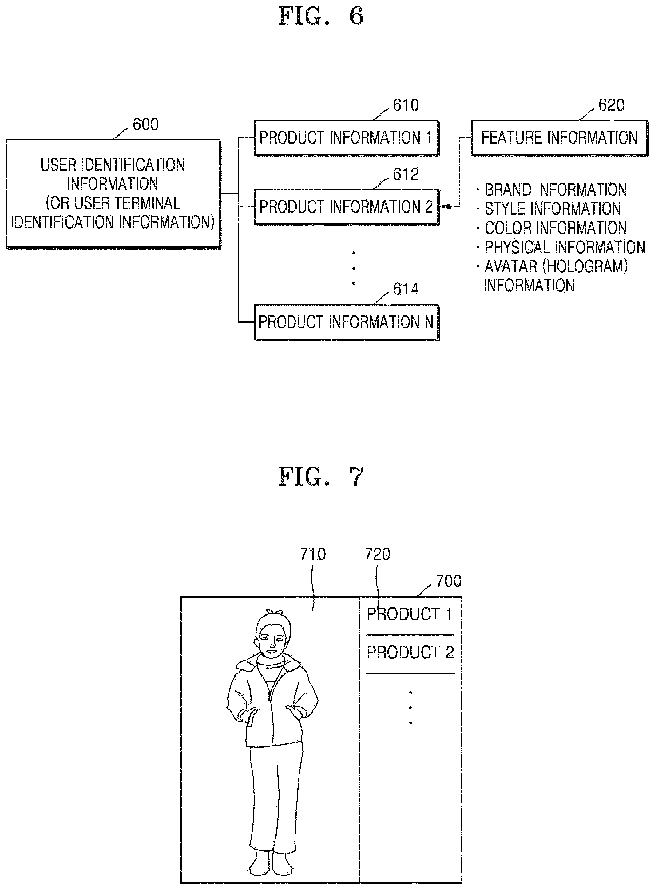

The product search server 200 maps product information registered by the second user 120 to identification information of the second user terminals 220, 222, and 224 (or identification information of the second user) and stores and manages the product information in a database. The product search server 200 also stores a variety of user feature information that may be used to specify the second user 120. Here, the user feature information is not unique identification information such as a phone number or a resident registration number for each user but is a movement of the second user, brand information, design information, or color information of a product worn or carried by the second user, or physical information of the second user, which may be used by the first user to easily visually specify the second user. An example of second-user-specific product information that is stored and managed by the product search server 200 is shown in FIG. 6.

The first user 110 transmits a product search request including user feature information that may specify the second user 120 to the product search server 200 by using a first user terminal 210 carried by the first user 110. As an example, the user feature information may include the movement of the second user, the style information, color information, and physical information of the second user, etc., which have been described above. As another example, when the first user 110 likes and searches for an automobile driven by or a motorcycle or bicycle ridden by the second user 120 that just passed by, the first user 110 inputs information that may specify the automobile, the motorcycle, or the bicycle as the user feature information. Since the automobile or the like passes by quickly, the first user may input a movement, a color, or the like of the automobile or the like as the user feature information.

When the product search request is received from the first user terminal 210, the product search server 200 searches for the second user terminal 220, 222, or 224 corresponding to the user feature information from among user terminals positioned within an area on the basis of a position of the first user terminal 210. When the second user terminal 220, 222, or 224 is found, the product search server 200 provides product information mapped to the found second user terminal 220, 222, or 224 to the first user terminal 210.

Depending on the embodiment, the product search server 200 may prevent the second user 120 from being found within a predetermined area by the first user 110. For example, the second user 120 may prestore information regarding a region where his or her privacy needs to be protected such as a vicinity of his or her house in the product search server 200. When the second user terminal 220 is located within the predetermined region, the product search server 200 does not allow the second user 120 to be found by a service according to this embodiment.

As another example, the product search server 200 may count the number of first users 210 that have searched for product information of the second user 120, and may provide the number to the second user terminal 220, 222, or 224.

As still another example, the product search server 200 may provide a sales rank of a product of the second user 120 that has been searched for most frequently during a recent period of time to the first user terminal 210 on the basis of a location of the first user 110.

As still another example, when there are a plurality of second users found using user feature information, the product search server 200 may provide location information or feature information of the plurality of second users to the first user terminal, and may enable the first user to specify one of the second users.

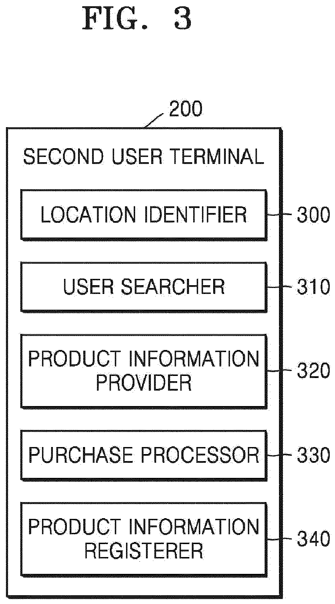

Referring to FIG. 3, the product search server 200 includes a location identifier 300, a user searcher 310, a product information provider 320, a purchase processor 330, and a product information registerer 340.

The location identifier 300 identifies location information of user terminals. The location identifier 300 may receive Global Positioning System (GPS) information of each of the terminals and identify locations of the terminals. Alternatively, the location identifier 300 may identify the locations of the terminals by using location information of repeaters accessed by the terminals. When a terminal is located indoors, the location identifier 300 may identify the location of the terminal using various conventional indoor positioning systems.

As another example, the location identifier 300 may receive location information that is directly input by the first user through the first user terminal. For example, the first user may input location information, such as a specified region name (e.g., Gangnam Station Exit 4) or a specified business name (e.g., Jong-ro Kyobo Bookstore), that may be used to identify a corresponding region, and may send the location information to the location identifier 300. In addition, various conventional locating methods or apparatuses may be implemented in the location identifier 300 according to this embodiment.

As still another example, the location identifier 300 may receive location information of the second user from the first user terminal. For example, the first user may provide the location information of the second user to the product search server 200 when the second user is located 10 meters northward from the first user or when the second user is located at a specified location (e.g., at Gangnam Station Exit 4 or in front of a bakery having a specific business name). In this case, the product search server 200 may specify the second user more accurately on the basis of the location information of the second user received from the first user terminal.

When the first user inputs a business name or a street name as the location of the second user, the location identifier 300 may search for the business name or street name in the vicinity of the location of the first user and specify the location of the second user. Information on a distance or direction between the first user and the second user may be directly input by the first user. In this case, however, there may be a large error in the information. Accordingly, the first user terminal may automatically identify direction information and distance information through communication with an Internet of Things (IoT) device implemented in a product worn or carried by the second user or with the second user terminal.

When a search request including user feature information is received from the first user terminal, the user searcher 310 searches for a second user (that is, a second user terminal) corresponding to the user feature information. The user searcher 310 may search for a second user terminal that satisfies the user feature information from among one or more user terminals located within an area on the basis of the location of the first user. The user searcher 310 may receive detailed location information (e.g., a specified shop name or the like) of the second user from the first user terminal and may search for a user terminal matching the user feature information within a limited range on the basis of the location information to increase accuracy and speed of the search.

A plurality of second user terminals that satisfy the user feature information may be found. In this case, the user searcher 310 provides location information of the found plurality of second user terminals or feature information of the second user to the first user terminal. Also, the user searcher 310 receives selection information for any one of the plurality of second user terminals from the first user terminal and finally specifies the second user terminal. Here, the location information of the found plurality of second user terminals may be displayed on the first user terminal in addition to a map. Alternatively, the feature information may be displayed on the first user terminal. For example, the user searcher 310 may provide photos of the plurality of second users that are registered by the plurality of second users to the first user terminal, and the first user may specify a second user who was just seen by using the photos of the plurality of second users.

As an example, the user feature information used to specify the second user (that is, the second user terminal) includes a movement of the user, brand information, design information, style information, or color information of a product worn or carried by the user, or physical information or avatar information of the user.

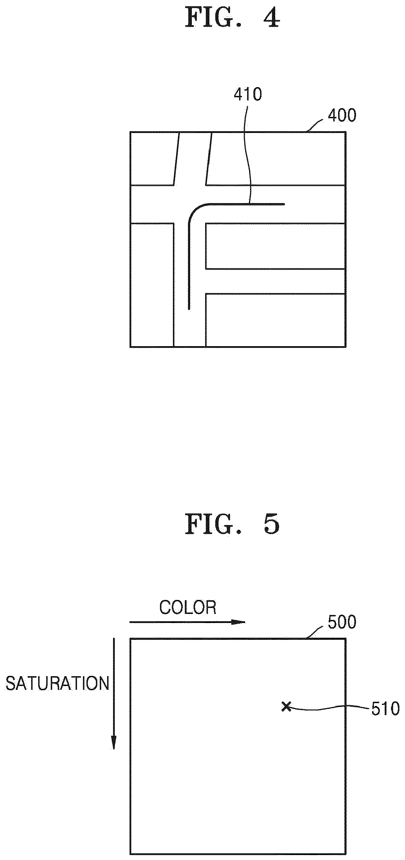

User movement information refers to a movement of the second user with respect to the first user. The user movement information may be directly input by the first user through a screen of the first user terminal. Alternatively, the first user terminal may receive a signal transmitted from an IoT device or a wireless communication device such as radio-frequency identification (RFID) attached to the product, display movements of a plurality of users located in the vicinity of the first user terminal, and receive any one of movements selected by the first user. An input example of the user movement information is shown in FIG. 4.

The brand information is information having the form of text, a symbol, or an image displayed on the product worn or carried by the second user. When a brand is composed of text information or may be recognized by the first user, the first user may easily input a brand name into the first user terminal in the form of text. When a brand is composed of only a symbol or an image, the first user may draw the symbol or the image of the brand through a screen interface of the first user terminal as an input. Alternatively, when a brand image of the product worn or carried by the second user is captured through a camera or the like, the first user terminal may receive the captured image as an input of the brand image.

The design information refers to a design feature of the product worn or carried by the second user. For example, when specified clothes have a check pattern or has a large picture of a tiger at its center, the specified clothes may have a design feature for distinguishing from other general clothes. The first user may draw a design feature of a product through a screen interface of the first user terminal or may input the design feature in the form of text. Alternatively, when a design image of the product worn or carried by the second user is captured through a camera or the like, the first user terminal may receive the captured image as an input of the design image.

The style information refers to information on an overall style of the second user that is implemented by the product worn or carried by the second user. For example, the first user may identify whether the second user is dressed in formal style or in hip-hop style and input a result of the identification to the first user terminal as the feature information. For convenience of input of style information, the first user terminal may prestore examples of the style information and may enable the first user to select any one of the examples of the style information.

The color information refers to information on an overall color of the second user that is implemented by the product worn or carried by the second user. For example, when the second user wears clothes with shades of black, the first user inputs black as the color information. However, the color may be classified into very various shades according to saturation or concentration, rather than into just several shades, and thus there are restrictions in inputting various colors in the form of text. Accordingly, a desired color may be selected and input through a color wheel in which various colors and saturations are expressed as shown in FIG. 5.

The physical information refers to body-related information such as a hair style, a height, or a weight of the second user. In addition, an avatar similar to the second user may be selected from among a predefined plurality of avatars that are stored in the first user terminal and may be input as the user feature information. Here, the predefined plurality of avatars may be pre-registered in the product search server by the plurality of second users. In other words, the plurality of second users may decorate avatars so that each of the avatars is most similar to a corresponding second user (i.e., each of the second users makes a body shape, a face shape such as eyes, a nose, and a mouth, and a hair shape of an avatar similar to those of the second user or decorates products worn or carried by the avatar) and store the decorated avatars in the product search server, and the product search server may provide the stored avatars to the first user terminal and enable the first user to easily select an avatar that is most similar to a second user intended to be found.

At least two pieces of the aforementioned user feature information may be combined and used. For example, the user searcher 310 may receive an input of the movement information and the color information from the first user terminal and search for the second user.

When the second user is found by the user searcher 310, the product information provider 320 provides product information mapped to the second user to the first user terminal. The product information provider 320 may provide the product information through a screen shown in FIG. 7. As another example, the product information provider 320 may additionally provide information regarding liked brands of the found second user.

When the first user selects a specified product using the product information provided by the product information provider 320, the purchase processor 330 provides purchase information for the product and enables the product to be purchased through a payment. As another example, the purchase processor 330 may search for information regarding at least one offline shop where the product selected by the first user is available for purchase on the basis of the location of the first user, and may provide the search result to the first user.

The product information registerer 340 receives a registration of information on products from the second user, maps the information to second user identification information (or second user terminal identification information), and stores the mapped information. As another example, the product information registerer 340 may receive information on products from a franchise terminal of an online or offline franchise and then register and store the received information. For example, when the second user purchases a product at an online or offline shop and pays for the purchased product, the franchise terminal may transmit information on the second user (e.g., a phone number of the second user terminal) to the product information registerer 340 together with information on the product purchased by the second user for the purpose of registration.

Referring to FIG. 4, the first user inputs a movement 410 of the second user through a screen interface 400 of the first user terminal. Map information regarding a place where the first user terminal is located is displayed on the screen interface 400 of the first user terminal, and the first user inputs a movement path of the second user into a map. Depending on the embodiment, the map information may not be displayed.

Alternatively, the first user terminal may identify a plurality of movements of nearby users on the basis of various wireless signals received from products worn or carried by the surrounding users and automatically display the movements on a screen thereof, and the first user may select the movement 410 of the second user, whose product is to be searched for, from among the plurality of movements displayed on the screen interface 400.

The movement 410 input or selected by the first user is transmitted to a product search server as user feature information. In this case, other user feature information (e.g., color information, physical information, etc.) may also be transmitted to the product search server.

Referring to FIG. 5, the first user inputs color information used to specify the second user through a screen interface 500 of the first user terminal. Here, the color information refers to an overall color of a product worn or carried by a user to be searched for. For example, when the second user wears clothes with shades of brown, the first user may input brown as the color information. However, since the shades of brown are different depending on saturation or concentration, the first user terminal may provide a color wheel 500 in which various colors and saturations are expressed so that a color is accurately input, and may enable the first user to select a specified color point 510 from the color wheel 500.

As still another example, the first user may input information on a plurality of colors used to specify the second user through the screen interface 500 of the first user terminal. For example, when the second user wears a top with shades of red and a bottom with shades of black, the first user may select two colors of red and black through the screen interface 500 and input the selected colors as the user feature information.

As still another example, the screen interface 500 of the first user terminal may display an image of a target to be searched for on a screen, and the first user may select an approximate color for each position of the image and input the selected color as the user feature information. When the first user wants to search for clothes of the second user, a person image is displayed on the screen of the first user terminal, and the first user selects a color for each position (e.g., a top and a bottom) of the person image. The first user terminal may prestore image of products intended to be searched for by the first user, and may provide the image to the first user so that the first user may select any one of the images.

Referring to FIG. 6, a product search server maps information of one or more products 610, 612, and 614 to user identification information (or user terminal identification information) 600 and registers and stores the mapped product information. For example, the second user may register information (e.g., a product image, a brand name, a color, an image feature, etc.) on a product intended to be sold or promoted in the product search server.

Also, the product search server receives various types of feature information 620 from the second user and registers and stores the received feature information 620 in order to search for the second user on the basis of various types of user feature information received from the first user.

User movement information among the feature information 620 is not information that may be fixed in advance. Whenever a product search request is received from the first user terminal, the product search server examines movements of user terminals located within an area from the first user terminal and searches for a user terminal having a matching movement.

The second user may register the feature information 620, such as brand information, design information, and color information, of a product worn or carried by the second user in the product search server so that the product worn or carried by the second user may be easily found by the first user. When the one or more products 610, 612, and 614 are selected by the second user, the product search server may automatically extract information on the selected products (such as brand information, design information, and color information) and store the extracted information as the feature information 620. That is, when the second user selects black pants of brand A and a black checked coat of brand B, the product search server may store brand A and brand B as the brand information of the feature information 620, store a checked pattern as the design information of the feature information 620, and store black as the color information of the feature information 620.

As sill another example, the second user may store information on his or her height, weight, hair style, or the like in the product search server as the feature information 620. Alternatively, the second user may store information regarding an avatar that resembles his or her appearance in the product search server as the feature information 620.

Referring to FIG. 7, a product search server searches for the second user by using user feature information received from the first user terminal. When the second user is found, the product search server provides a product information screen 700 registered by the found second user to the first user terminal.

In this case, the product search server may provide an avatar photo 710 including products worn or carried by the second user that is exposed to the first user as well as information 720 regarding the products. Depending on the embodiment, a photo of the second user wearing or carrying products may be provided in addition to the avatar photo 710.

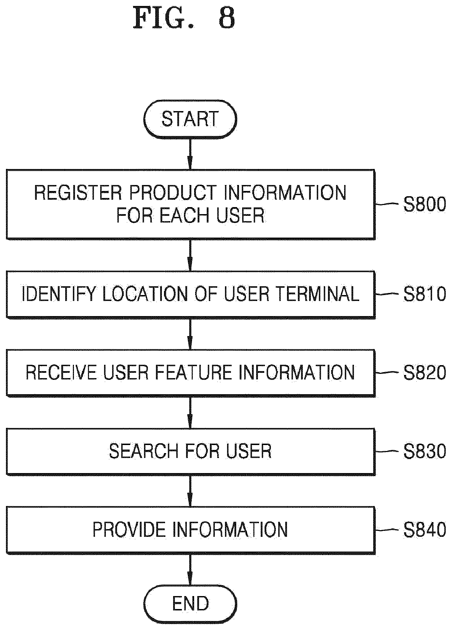

Referring to FIG. 8, a product search server receives product information and feature information for each user and then registers and stores the received information (S800). The product search server identifies a location of a user terminal in real time (S810). When the product search server receives a product search request including user feature information from a first user terminal (S820), the product search server searches for a second user corresponding to the user feature information among a plurality of user terminals located near the first user terminal (S830). Also, when the second user is found, the product search server provides product information registered by the found second user to the first user terminal.

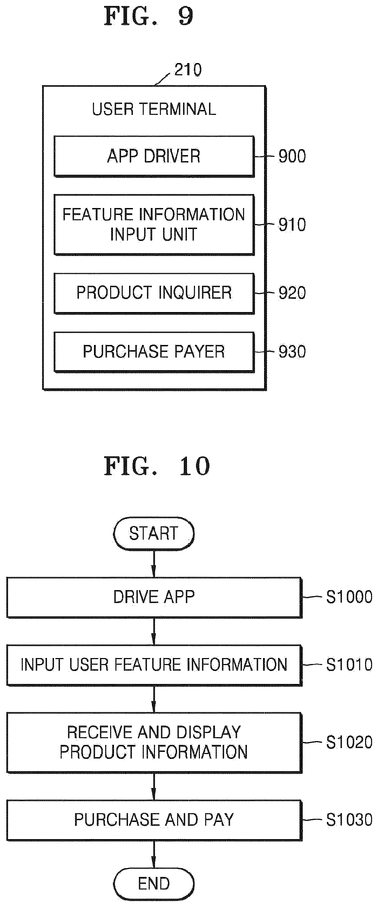

Referring to FIG. 9, a user terminal 210 includes an app driver 900, a feature information input unit 910, a product inquirer 920, and a purchase payer 930. The user terminal 210 includes various types of terminals capable of wired or wireless communication, e.g., a smartphone, a smartwatch, smartglasses, a tablet PC, an IoT device, etc.

The app driver 900 drives a product search application according to this embodiment. The product search application may be prestored in a user terminal or may be received from an external server and then installed by a user. The app driver 900 may quickly drive the application by using a specified operation (e.g., double click on a power button) while the terminal is turned off (or locked).

The feature information input unit 910 may receive an input of user feature information that may specify a user to be searched for from a user. The feature information input unit 910 may provide a screen interface as shown in FIG. 4 or 5, through which an input of movement information or color information may be received. The feature information input unit 910 transmits a product search request including user feature information to a product search server. The feature information input unit 910 may receive an input of the user feature information through various input devices. For example, the feature information input unit may receive an input of a specified command or data through brain waves of the user or receive a command of a motion or blinking of the eyes of a first user through smartglasses to select a second user.

The product inquirer 920 receives product information of a user found by the product search server and displays the received product information. For example, the product inquirer 920 receives a screen such as one shown in FIG. 7 and displays the received screen.

The purchase payer 930 transmits information regarding a product selected by the user from among products displayed by the product inquirer 920 to the product search server, receives information regarding a purchase from the product search server, and displays the information regarding the purchase.

Referring to FIG. 10, a user terminal drives an application for providing a location-based product search service according to this embodiment (S1000). The user terminal transmits user feature information received from a user to a product search server (S1010). The user terminal receives found product information from the product search server and displays the found product information (S1020), and then performs a purchase payment process for the displayed product (S1030).

According to an embodiment of the present invention, it is possible to easily acquire information regarding products worn or carried by nearby people and also directly purchase the products if necessary.

The invention can also be embodied as computer-readable codes on a computer-readable recording medium. The computer readable recording medium is any data storage device that can store data which can thereafter be read by a computer system. Examples of the computer-readable recording medium include a read-only memory (ROM), a random access memory (RAM), a compact disc (CD)-ROM, a magnetic tape, a floppy disk, an optical disk, etc. The computer-readable recording medium can also be distributed over network-coupled computer systems so that the computer readable code is stored and executed in a distributed fashion.

This invention has been particularly shown and described with reference to preferred embodiments thereof. Those skilled in the art should understand that various changes in form and details may be made therein without departing from the spirit and scope of the present invention. The exemplary embodiments should be considered in descriptive sense only and not for purposes of limitation. Therefore, the scope of embodiments is defined not by the detailed description of embodiments but by the appended claims, and all differences within the scope should be construed as being included in the invention.

Embodiments described herein should be understood as being considered in a descriptive sense only and not for purposes of limitation. Descriptions of features or aspects within each embodiment should typically be considered as available for other similar features or aspects in other embodiments.

While one or more embodiments have been described with reference to the figures, those of ordinary skill in the art should understand that various changes in form and details may be made therein without departing from the spirit and scope of the disclosure as defined by the following claims.

## Claims

1. A location-based product search method which is performed by a product search server, the location-based product search method comprising:
collecting location information of one or more user terminals;
receiving feature information of a second user from a first user terminal;
searching for a second user terminal corresponding to the feature information of the second user among one or more user terminals located within an area based on location information of the first user terminal; and
providing product information mapped to the second user terminal to the first user terminal.

2. The location-based product search method of claim 1, wherein:
the feature information of the second user is movement information of the second user who carries the second user terminal; and
the searching comprises identifying the second user terminal with motion matching the movement information within the area, which is identified based on the location information of the first user terminal, for a predetermined time before the feature information of the second user is received.

3. The location-based product search method of claim 1, wherein:
the feature information of the second user is brand information, style information, or color information of a product worn or carried by the second user who carries the second user terminal; and
the searching comprises searching for brand information, style information, or color information mapped to one or more user terminals located within the area, which is identified based on the location information of the first user terminal, and identifying the second user terminal.

4. The location-based product search method of claim 1, wherein:
the feature information of the second user is physical information of the second user or avatar information that specifies the second user; and
the searching comprises searching for physical information or avatar information mapped to one or more user terminals located within the area, which is identified based on the location information of the first user terminal, and identifying the second user terminal.

5. The location-based product search method of any of claims 1 to 4, wherein the searching comprises:
providing information regarding a plurality of user terminals corresponding to the feature information of the second user to the first user terminal together with location information of the plurality of user terminals; and
when information of a user terminal selected based on the location information of the plurality of user terminals is received from the first user terminal, identifying the selected user terminal as the second user terminal.

6. The location-based product search method of any of claims 1 to 5, wherein the providing comprises:
providing information on one or more products mapped to the second user terminal to the first user terminal; and
when selection information for the information on one or more products is received from the first user terminal, providing a purchase screen including price information of a product corresponding to the selection information to the first user terminal.

7. The location-based product search method of any of claims 1 to 6, further comprising:
receiving second user terminal identification information of the second user who purchases a product from an online or offline franchise terminal together with information of the product; and
mapping the information of the product to the second user terminal identification information and storing the mapped information.

8. The location-based product search method of any of claims 1 to 7, further comprising searching for information regarding an offline shop where a product is available to be purchased based on a location of the first user terminal and providing the information regarding the offline shop.

9. A location-based product search method which is performed by a user terminal, the location-based product search method comprising:
receiving an input of user feature information through a screen interface;
transmitting the user feature information to a product search server; and
receiving product information mapped to a user terminal found based on the user feature information among one or more user terminals located within an area, which is identified based on a location of the user terminal, from the product search server and displaying the received product information.

10. The location-based product search method of claim 9, wherein the receiving comprises receiving, as the user feature information, an input of a movement of a user to be searched for that is displayed through a screen interface.

11. The location-based product search method of claim 9, wherein the receiving comprises receiving, as the user feature information, an input of color information determined by selecting a specified point of a color wheel through a screen interface provided as the color wheel.

12. The location-based product search method of claim 9, wherein the receiving comprises receiving, as the user feature information, an input of selection information for a human body feature or an avatar through a screen interface.

13. A non-transitory computer-readable recording medium storing a program for executing the method of any one of claims 1 to 8.

14. A non-transitory computer-readable recording medium storing a program for executing the method of any one of claims 9 to 12.
